# EUROPEAN PATENT APPLICATION

(11) **EP 1 164 795 A2**
(43) Date of publication of application: **19.12.2001**
(21) Application number: 01850101.5
(22) Date of filing: 12.06.2001
(51) Int. Cl.: H04N 7/16, H04N 7/173

(54) **Logging of events**

(30) Priority: 15.06.2000 SE 0002235
(71) Applicant: Nokia Corporation, 02150 Espoo (FI)
(72) Inventor: Niklasson, Martin, 584 36 Linköping (SE)
(74) Representative: Estreen, Lars

(57) **Abstract**

A method of logging events in a multimedia integrated receiver decoder (40) comprises the following steps: providing a trigger (100), transmitting said trigger to said integrated receiver decoder in a data stream together (30) with an event to be monitored, and if said integrated receiver decoder is tuned to said data stream, storing said trigger. This provides for a method wherein the amount of data required to be stored and transmitted is kept to a minimum and wherein the integrity of a user is maintained.

## Description

### FIELD OF INVENTION

The present invention relates generally to logging of events in an Integrated Receiver Decoder, such as a multimedia terminal.

### BACKGROUND

Interactive television systems capable of two-way communication between computer systems operating as information service providers and networked Integrated Receiver Decoders (IRDs) are becoming increasingly popular. Such systems open up for new services and features for television users as well as for operators. A standard developed by the Project on Digital Video Broadcasting is the so-called Digital Video Broadcasting standard or simply DVB standard. Its main intent is to reap the benefits of technical standardisation. For more information regarding the DVB standard, reference is made to the publication "Digital Television MPEG 1 MPEG 2 And principles of the DVB System", H Benoit, ISBN 0-471-23810-4, or to the DVB Home Page on the Internet: http://www.dvb.org.

With the power of today's set-top boxes and other IRDs it is possible to analyse the behaviour of television viewers by letting the IRD track the users channel switches. This is done by constantly logging the charnel selection of the IRD and to send this information on a back channel to the operator system, wherein the information is used to evaluate the popularity of different television programmes etc. Unfortunately, this information collection can have the effect of disturbing the integrity of the users, giving them a feeling of being monitored. Another drawback is that the amount of log data grows very quickly as all channel switches are saved together with a time stamp over a relatively long period of time.

### SUMMARY OF THE INVENTION

An object of the present invention is to provide a method, a multimedia integrated receiver decoder and a system for logging the behaviour of a multimedia user as well as a computer program product wherein the above mentioned drawbacks are eliminated or at least mitigated.

The invention is based on the realisation that not all channel switches of a user have to be logged. Thus, instead of logging event selection continuously, the answer to the question "is this event viewed now?" is logged.

According to a first aspect of the invention there is provided a method as defined in claim 1.

According to a second aspect of the invention there is provided a multimedia integrated receiver decoder as defined in claim 9.

According to a third aspect of the invention there is provided a system as defined in claim 10.

According to a fourth aspect of the invention there is provided a computer program product as defined in claim 11.

By using the method, the multimedia terminal, the system and the computer program product according to the invention the above objectives are attained. Thus, the user gets less feeling of being watched. A further advantage is that the operator gets a smaller data set, which is also easier to transfer and to analyse.

### BRIEF DESCRIPTION OF DRAWINGS

The invention is now described, by way of example, with reference to the accompanying drawings, in which:
FIG. 1 is an overall diagram of a communication system embodying the invention,
FIG. 2 is conceptual model of a user equipment utilising a DVB (MPEG-2) baseband processor for receiving information, and
FIG. 3 shows the general structure of a trigger used with the inventive method.

### DETAILED DESCRIPTION OF THE INVENTION

In the following, a preferred embodiment of a method and a system according to the invention will be described.

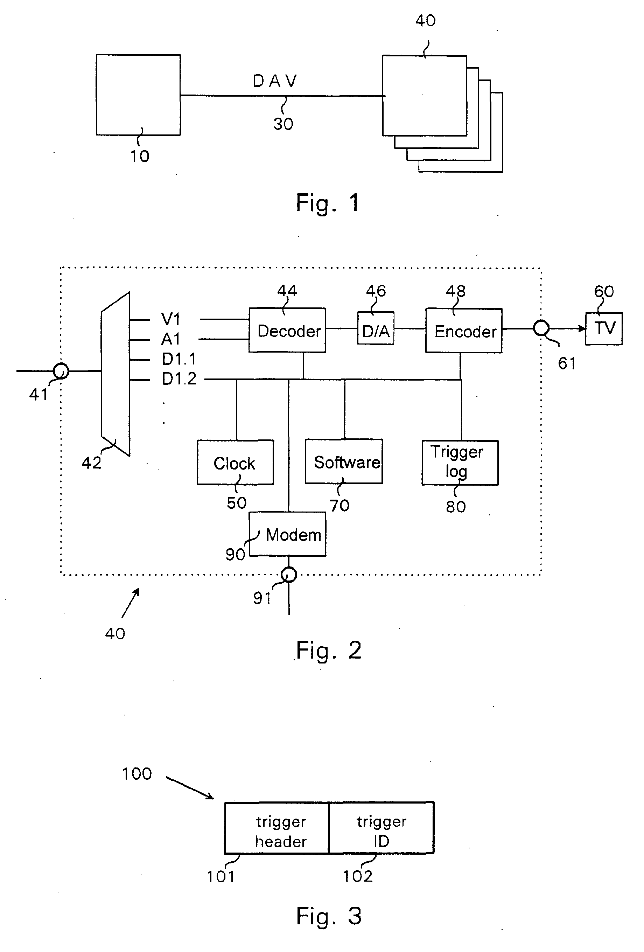

The backbone of a communication system for multimedia applications will now be briefly discussed with reference to figure 1. The backbone of the system comprises a number of communication paths 30, one of which is shown in figure 1. The transmission medium supports high-speed transmission of digital information, such as audio (A), video (V) and data (D). A number of users are connected to the backbone, of which a first baseband processor user 10 functions as a transmitter of information, i.e., an operator, and a second user 40 functions as a receiver of multimedia information, such as a subscriber of television programmes.

A method covered by a standard, such as MPE, Multiprotocol Encapsulation, could be used to send the information to the receiver 40 through receiver equipment at the user, which will now be discussed with reference to figure 2. A transport stream arriving from the transmission medium is received at an input 41 and is first demultiplexed in a Transport Demultiplexer 42, splitting the information into several programme streams comprising related elementary streams, four of which are shown as an example. The exemplary streams comprise a video stream V1, an audio stream A1 and two data streams D1.1, D1.2. This information results in a TV programme, for example.

The video and audio streams are directed to a video and audio decoder 44, wherein the signals are decoded. The decoded audio and video signals are synchronised in the decoder 44 by means of a so-called time stamp or PTS.

The decoded signals are input to a digital to analogue (D/A) converter 46, wherein the digital information is converted to analogue form useable by a TV encoder, such as a PAL encoder 48. The encoder 48 supplies the encoded information through an output 61 and to a presentation unit, in this case a TV set 60, on which the information is displayed.

The data information can comprise several kinds of information, some of which are user defined. In the present invention, the data stream is used to supply so-called triggers to the IRD 40. The triggers are explained in more detail below.

In order to keep track of time, the receiver 40 also comprises a clock reference 50. This clock is adjusted in accordance with timing signals sent by the transmitting processor 10, e.g., the Service Provider. The time values of the clock 50 correspond to the PTS values of the incoming information.

The operation of the IRD 40 is controlled by means of software 70 run on suitable processor hardware (not shown). Thus, the software is stored in memory and is run either on request by the user or in response to some event.

The IRD also comprises a modem 90 providing a back channel to the operator 10, for example. Thus the modem is connected to some kind of communication medium, such as a telephone line. By means of the modem connection, data information generated and stored in the IRD 40 can be sent from the IRD through a modem output 91.

The inventive logging procedure will now be described in detail, partly with reference to figure 3. First the operator 10 determines which events, e.g., television programmes and commercials, that are to be logged. For example, an advertiser is interested in knowing the response to a specific TV commercial, i.e., are television viewers actually watching the commercials? Triggers for that commercial is then created by hardware and software (not shown) in the transmitter 10.

Triggers created at the operator 40 are then sent with the data stream to the user 40 at the time the event associated with the trigger is sent. The software 70 continuously monitors the incoming data stream to which the IRD is currently tuned to and every trigger found in the stream is stored in a trigger memory 80. The structure of a preferred trigger 100 is shown in figure 3 and the trigger comprises a header 101 indicating that it is a trigger and a field 102 containing a unique trigger identification ID.

The trigger ID 102 can be for example a numerical value, wherein different operators have different number series to ensure that each trigger has a unique ID. However, the IDs have to be unique only during a specific period of use, e.g. a week or a month. When information is transferred back to the operator, see below, old IDs can be reused.

If the IRD is tuned to the channel in which the event to be monitored was sent, the software 70 identifies the trigger header 101 in the data stream. After having identified the information as a trigger, the software extracts the trigger ID 102 from the stream. The trigger ID is preferably stored as a file in a non-volatile memory, such as a hard disk, in a trigger log 80. The trigger log contains a list of trigger IDs and nothing more, which provides for a compact information occupying a limited amount of storage space.

Thus, there is no selectivity in the IRD 40, i.e., every time a trigger 100 is identified, its associated ID 102 is stored in the trigger log. This provides for a simple yet reliable monitoring of channel selection.

However, the inventive monitoring method does not provide a complete information of which channel is selected at every moment; it only provides an answer to the question: "is the IRD currently tuned to this channel?" This question has a much lesser impact on the integrity of the user.

At irregular or regular intervals, such as once every week or month, the trigger log 80 is sent to the operator 10 for evaluation. This transmittal of the trigger log can be either time driven in the case of regular intervals or it can be initiated either by the operator or the user, e.g. by selecting a menu option.

The trigger log 80 can be sent with an accompanying user identification so that the receiver of the information will know who has created this particular trigger log. Alternatively, to lessen the integrity disturbance, the trigger log 80 is sent without user identification. In that way, the receiver of the trigger log 80 will not know the preferences for a specific user but will nevertheless be able to evaluate the general interest for a TV commercial, for example.

In an alternative embodiment of the method according to the invention, the unique trigger ID 102 is omitted from the trigger 100. Instead, only the trigger header 101 is sent in the data stream. The software 70 monitors the stream as in the first embodiment and when a trigger header is found, the software 70 adds information to the trigger log 80. However, in this second embodiment, the software itself provides the information to be stored in the trigger log 80, namely a channel ID and a time stamp obtained from the clock 50. These two information items together define the monitored event. As in the first embodiment, the trigger log is later sent to the operator for further evaluation.

In order to use the inventive method, some kind of agreement between operator and user is probably needed. This can be in the form of a written agreement, wherein the user permits the operator to use the method. This agreement could be connected to some kind of fee reduction for using the operator's services, giving the user an incitement to allow the use of the method.

Another way for the user to agree is to have the software 70 display at regular intervals, e.g., once every week, a text like "Please confirm transmittal of information to operator: YES/NO". By pressing the YES button on his/her remote control, the user agrees to the use of the inventive method and initiates transmittal of the trigger log 80 via the modem connection 90.

With the inventive method, limited amounts of data are generated. This is an advantage when equipment with relatively limited bandwidth, such as the modem 90, is used for transmitting the data back to the operator.

Preferred embodiments of the invention have been described. The person skilled in the art realises that these can be varied within the scope of the appended claims. Thus, a specific multimedia standard has been described, but any form of communication system using a data stream is feasible.

In the preferred embodiments, the trigger log 80 is transmitted by modem to an operator 40. However, this trigger log can be sent in any convenient way and to other parties than the operator as well, such as directly to an advertiser having a TV commercial monitored. In that way, the advertiser gets the requested feedback much quicker and easier than if another party first receives the information.

Optionally there can be "start" and "stop" triggers, by means of which it can be checked whether an entire event has been viewed. This solves the problem when a trigger is activated at the beginning of a programme, for example. If the user chooses to switch to a different channel after a few minutes, the trigger indicates that the programme has been watched even though only a part of it was actually watched. Thus, if both the start trigger sent at the beginning of the event and the stop trigger sent at the end of the event are logged, the event can be considered to have been watched.

A back channel provided by means of a modem connection has been described. It is obvious that this back channel can be provided by any suitable means known to the person skilled in the art.

The exact content of the trigger log 80 can of course also vary.

## Claims

1. A method of logging events in a multimedia integrated receiver decoder (40), said method being **characterised by** the following steps:
a) providing a trigger (100),
b) transmitting said trigger (100) to said integrated receiver decoder in a data stream (30) together with an event to be monitored, and
c) if said integrated receiver decoder is tuned to said data stream, storing said trigger (100).

2. The method according to claim 1, comprising the additional step of:
d) transmitting said stored trigger information from said integrated receiver decoder (40).

3. The method according to claim 1 or 2, wherein said trigger (100) comprises a unique trigger identity identification (102).

4. The method according to claim 3, wherein, in step c), said trigger identity identification (102) is stored in a log file (80).

5. The method according to claim 4, wherein said log file (80) comprises only stored identity identifications (102).

6. The method according to claim 1 or 2, wherein, in step c), a channel identifier identifying the channel presently tuned to is stored in a list together with a time stamp.

7. The method according to any of claims 1-6, wherein said stored trigger information is used for determining selection of said specific event.

8. The method according to any of claims 1-7, wherein at least two triggers (100) are sent for a single event to be monitored.

9. A multimedia integrated receiver decoder (40), comprising:
- means (42) for receiving a data stream,
**characterised by**
- means (70) for identifying triggers in said data stream accompanying an event in said data stream,
- means (80) for storing information regarding said triggers, and
- means (90) for transmitting said stored information (80).

10. A system for logging events in a multimedia integrated receiver decoder (40), said system comprising:
- a transmitter (10),
- a receiver (40),
- means (30) for interconnecting said transmitter and said receiver,
**characterised in that**
- said transmitter (10) comprises:
- means for providing triggers in a data stream accompanying an event,
- means for transmitting said data stream to said receiver (30), and
- said receiver (40) comprises:
- means for identifying said triggers in a data stream received by the receiver (40),
- means for storing identified triggers in memory, and
- means (90) for transmitting said stored identified triggers (80) from said integrated receiver decoder.

11. A computer program product directly loadable into the internal memory of a multimedia integrated receiver decoder, said computer program product comprising software code portions for performing the following steps:
- identifying triggers in a data stream received by the multimedia integrated receiver decoder (40),
- storing identified triggers in memory, and
- transmitting said stored identified triggers from said integrated receiver decoder.
